# NEUE EUROPÄISCHE PATENTSCHRIFT

(11) **EP 0 854 799 B2**
(45) Veröffentlichungstag und Bekanntmachung des Hinweises auf die Entscheidung über den Einspruch: **04.02.2004**
(45) Hinweis auf die Patenterteilung: 26.05.1999
(21) Anmeldenummer: 96943865.4
(22) Anmeldetag: 07.10.1996
(51) Int. Cl.: B60R 16/02, B60R 21/32

(54) **ANORDNUNG ZUM ANSTEUERN EINER AUSLÖSEVORRICHTUNG EINES RÜCKHALTESYSTEMS**
DEVICE FOR DRIVING THE TRIGGERING DEVICE OF A RESTRAINING SYSTEM
DISPOSITIF DE COMMANDE D'UN ENSEMBLE DE DECLENCHEMENT D'UN SYSTEME DE RETENUE

(30) Priorität: 20.10.1995 DE 19539070
(43) Veröffentlichungstag der Anmeldung: 29.07.1998
(73) Patentinhaber: ROBERT BOSCH GMBH, 70442 Stuttgart (DE)
(72) Erfinder: ZABLER, Erich, D-76297 Stutensee (DE); DUKART, Anton, D-76744 Woerth (DE)
(86) Internationale Anmeldenummer: PCT/DE1996/001921
(87) Internationale Veröffentlichungsnummer: WO 1997/014583

(56) Entgegenhaltungen:
- EP-A- 0 283 188
- EP-A- 0 471 871
- EP-A- 0 577 988
- EP-A- 0 616 924
- WO-A-91/00637
- WO-A-95/11819
- DE-A- 3 522 907
- DE-A- 4 120 650
- DE-A- 4 404 816
- DE-A- 19 614 161
- DE-C- 3 812 631
- DE-C- 19 614 161

## Beschreibung

### Stand der Technik

Die vorliegende Erfindung betrifft eine Anordnung zum Ansteuern einer Auslösevorrichtung eines Rückhaltesystems für Fahrzeuginsassen, wobei ein Übertrager vorgesehen ist, an dessen Sekundärseite die Auslösevorrichtung angeschlossen ist.

Eine derartige Anordnung ist aus der DE-OS 24 33 555 bekannt. Das hierin erwähnte Rückhaltesystem ist ein in einem Lenkrad angeordneter Airbag. Um ehemals verwendete aufwendige und störanfällige Schleifringe oder Wickelfedern für die Übertragung von Signalen zwischen einem am Fahrzeugchassis angeordneten Steuergerät und der im Lenkrad installierten Auslösevorrichtung (Zündpille) des Airbag zu umgehen, wird gemäß diesem Stand der Technik ein Drehübertrager eingesetzt, dessen Primär- und Sekundärwicklung um die Lenkradachse gegeneinander verdrehbar angeordnet sind. An die Sekundärwicklung ist ausschließlich die Zündpille des Airbag angeschlossen, und die Primärwicklung ist über einen Schalter mit einer Batterie des Fahrzeugs verbunden. Durch primärseitig eingespeiste Impulse wird in der Sekundärwicklung eine

Spannung induziert, die zur Auslösung der Zündpille führt. Damit die in der Sekundärwicklung induzierte Spannung groß genug ist, um die Zündpille auszulösen, muß die magnetische Kopplung zwischen der Primär- und der Sekundärwicklung des Übertragers sehr groß sein. Eine hohe magnetische Kopplung erreicht man dadurch, daß beide Wicklungen in ferromagnetische Spulenkörper eingebettet werden. Ein solcher Übertrager ist in der Lage, sehr viel Energie aufzunehmen, auch wenn seine Wicklungsanschlüsse irrtümlicherweise mit Bordspannungsleitungen in Berührung kommen. Diese Energie reicht aber unter Umständen schon aus, um den Airbag auszulösen. Eine solche Fehlauslösung sollte aber in jedem Fall vermieden werden.

Aus der DE 44 04 816 A1 ist eine Anordnung zum Ansteuern einer Auslösevorrichtung eines Rückhaltesystems bekannt, bei der die Versorgungsspannung für die Auslösevorrichtung direkt von der Primärseite aus auf die Sekundärseite eines Transformators übertragen wird. Ein Spannungsregler bereitet die auf die Sekundärseite übertragene Spannung für die Auslösevorrichtung und andere elektronische Schaltungen auf der Sekundärseite auf. Demnach muß über den Transformator ständig eine relativ hohe Versorgungsspannung übertragen werden, was wiederum eine mit den obengenannten Nachteilen verbundene hohe magnetische Kopplung zwischen der Primär- und der Sekundärwicklung des Transformators erfordert.

Der Erfindung liegt daher die Aufgabe zugrunde, eine Anordnung der eingangs genannten Art anzugeben, die in der Lage ist, Fehlauslösungen eines Rückhaltesystems, dem das Auslösesignal über einen Übertrager zugeführt wird, zu vermeiden.

### Vorteile der Erfindung

Die genannte Aufgabe wird gemäß Anspruch 1 dadurch gelöst, daß der Auslösevorrichtung ein elektrischer Energiespeicher in Form eines Kondensators, vorgeschaltet ist, der von einem über den Übertrager zugeführten Ladestrom gespeist wird. Dadurch ist es möglich, einen Übertrager einzusetzen, der nur sehr wenig oder gar kein ferromagnetisches Material enthält, so daß die magnetische Kopplung zwischen den Wicklungen sehr gering ist und er deswegen nicht in der Lage ist, soviel Energie aufzunehmen, die ausreichen würde, um mit einem Impuls das Rückhaltesystem auszulösen. Die Auslösevorrichtung wird also allein von der in dem Energiespeicher geladenen Energie gezündet. Um das Rückhaltesystem auszulösen, wird ein Triggersignal *von* geringer Leistung vom Übertrager an eine sekundärseitig angeschlossene Steuerschaltung übertragen, welche den Energiespeicher an die Auslösevorrichtung durchschaltet. Ein solcher Übertrager, der nur wenig oder gar kein ferromagnetisches Material enthält, hat auch den Vorteil, daß er ein nur geringes Gewicht besitzt und wenig Bauraum beansprucht.

Vorteilhafte Weiterbildungen der Erfindung gehen aus den Unteransprüchen hervor. Danach kann die sekundärseitig an den Übertrager angeschlossene Steuerschaltung auch dazu verwendet werden, um den Ladezustand des elektrischen Energiespeichers zu überwachen und auch die Funktion der Auslösevorrichtung durch eine Widerstandsmessung zu kontrollieren und bei Abweichen des Widerstandes von einem vorgegebenen Wert ein Fehlersignal über den Übertrager an ein Steuergerät zurückzusenden. Es ist zweckmäßig, den elektrischen Energiespeicher mit einem Schalter zu überbrücken, der den Energiespeicher kurzschließt und dabei entlädt, wenn das Rückhaltesystem nicht in einem Fahrzeug eingebaut ist. Um für die Steuerschaltung das Triggersignal vom Energiespeicher-Ladestrom, welche beide vom Übertrager auf die Sekundärseite induziert werden, unterscheidbar zu machen, sollte das Triggersignal eine von der Steuerschaltung erkennbare Frequenzlage oder Zeitdauer oder digitale Codierung aufweisen.

### Beschreibung von Ausführungsbeispielen

Anhand zweier in der Zeichnung dargestellter Ausführungsbeispiele wird nachfolgend die Erfindung näher erläutert. Es zeigen:
Figur 1 eine Anordnung zum Ansteuern der Auslösevorrichtung eines Rückhaltesystems über einen Übertrager und
Figur 2 eine Anordnung zum Ansteuern der Auslösevorrichtung, bei der diese von einem Wechselstrom gezündet wird.

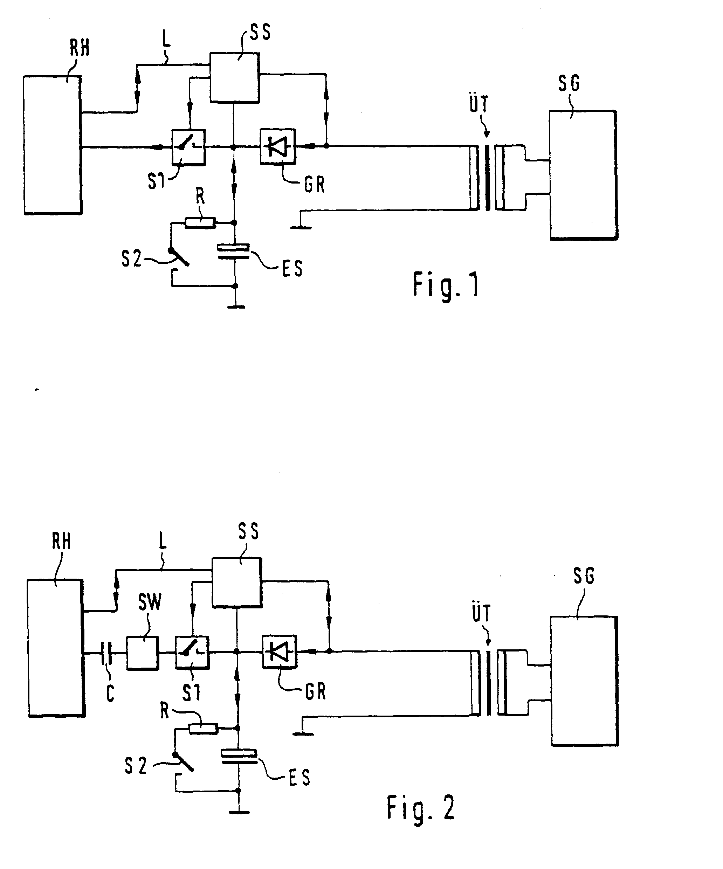

In der Figur 1 ist eine Schaltung zum Ansteuern der Auslosevorrichtung eines Rückhaltesystems für die Insassen eines Fahrzeugs dargestellt. Das Rückhaltesystem, hier durch einen Schaltblock RH symbolisiert, kann z. B. ein Airbag oder ein Gurtstraffer sein. Die Auslösung und Funktionsüberwachung der Auslösevorrichtung des Rückhaltesystems RH wird üblicherweise von einem hier nicht näher beschriebenen Steuergerät SG übernommen, das getrennt vom Rückhaltesystem an einer geeigneten Stelle des Fahrzeugchassis angeordnet ist. Die Signalübertragung zwischen dem Steuergerät SG und dem Rückhaltesystem RH übernimmt ein Übertrager ÜE. Dieser kann als Drehübertrager ausgebildet sein, dessen Primär- und Sekundärwicklung gegeneinander verdrehbar oder verschiebbar gelagert sind. Somit lassen sich galvanisch kontaktlos Signale zu einem Rückhaltesystem übertragen, das in einem gegenüber dem Fahrzeugchassis bewegbaren Fahrzeugteil (z. B. Lenkrad) installiert ist. Der hier verwendete Übertrager ÜT enthält nur wenig oder gar kein ferromagnetisches Material, weshalb er auch nicht in der Lage ist, z. B. bei ungewollter Berührung seiner Anschlüsse mit Bordspannungsleitungen soviel Energie aufzunehmen die ausreicht, das Rückhaltesystem auszulösen. Damit trotzdem im Ernstfall dem Rückhaltesystem RH eine für dessen Auslösung ausreichend hohe Zündenergie innerhalb einer Zeitdauer von höchstens einer Millisekunde zugeführt werden kann, ist sekundärseitig an den Übertrager ÜT ein elektrischer Energiespeicher ES, nämlich ein Kondensator, angeschlossen. Ein vom Übertrager ÜT zugeführtes Wechselspannungssignal geringer Leistung wird von einem dem Kondensator ES vorgeschalteten Gleichrichter GR gleichgerichtet, und mit diesem Gleichstrom wird der Kondensator ES aufgeladen. Die Aufladung des Kondensators ES erfolgt gleich nach Einschalten der Zündung des Fahrzeugmotors, wobei eine Aufladezeitkonstante von einigen Sekunden akzeptabel ist. Auch während der Fahrt sorgt der vom Übertrager ÜT zugeführte Ladestrom für ein ständiges Nachladen des Kondensators ES auf einen Energielevel, der für ein schnelles Auslösen des Rückhaltesystems RH erforderlich ist.

Zwischen der Auslösevorrichtung für das Rückhaltesystem RH und dem Kondensator ES befindet sich ein Schalter S1, vorzugsweise ein elektronischer Schalter, z. B. ein Transistor oder Tyristor. Wird dieser Schalter S1 geschlossen, so entlädt sich der Kondensator ES über der Auslösevorrichtung des Rückhaltesystems RH. Der Entladestrom des Kondensators ES ist zu Beginn des Entladevorganges so groß, daß er das Rückhaltesystem RH mit geringster Verzögerung auslost. Dafür, daß der Schalter S1 nur im Ernstfall geschlossen wird, sorgt eine ebenfalls an der Sekundärseite vor dem Gleichrichter GR angeschlossene Steuerschaltung SS. Diese Steuerschaltung SS reagiert auf ein vom Übertrager ÜT zugeführtes Triggersignal, indem sie den Schalter S1 schließt. Dieses Triggersignal ist ebenso wie der Ladestrom für den Kondensator ES von geringer Energie, muß sich aber gegenüber dem Ladestrom für die Steuerschaltung SS deutlich erkennbar unterscheiden. Als Unterscheidungskriterium kann z. B. eine bestimmte Frequenzlage oder eine definierte Zeitdauer oder eine ausgewählte digitale Codierung dienen, die von der Steuerschaltung SS fehlerfrei erkannt wird.

Die Steuerschaltung SS kann außer der Betätigung des Schalters S1 auch noch eine Überwachungsfunktion für den Ladezustand des Kondensators ES übernehmen. Sollte die Aufladung des Kondensators ES fehlerhaft sein, so gibt die Steuerschaltung SS ein entsprechendes Signal an den Übertrager ÜT, ab, das von dem an der Primärseite angeschlossenen Steuergerät SG erkannt wird. Außerdem kann die Stauerschaltung SS noch zur Überwachung der Funktion der Auslösevorrichtung des Rückhaltesystems RH herangezogen werden. Deshalb ist eine Verbindungsleitung L zwischen dem Rückhaltesystem RH und der Steuerschaltung SS vorgesehen. Die Kontrolle der Auslösevorrichtung besteht beispielsweise darin, daß der Widerstand der Zündpille von der Steuerschaltung SS gemessen wird und sie bei Überschreiten eines vorgegebenen Widerstandswertes ein Fehlersignal ebenfalls über den Übertrager ÜT, an das Steuergarät SG aussendet, welches die Fehlfunktion dem Fahrer des Fahrzeugs signalisiert.

Während gemäß der in Figur 1 dargestellten Ansteuerschaltung das Rückhaltesystem RH von einem Gleichstrom gezündet wird, kann ebenso eine Wechselstromzündung vorgesehen werden. Dazu sind in der in der Figur 2 dargestellten Ansteuerschaltung, welche im übrigen mit der zuvor beschriebenen Schaltung übereinstimmt, zwischen dem Schalter S1 und dem Rückhaltesystem RH ein Gleich-Wechselspannungs-Wandler SW und ein Koppelkondensator C eingefügt.

Der Kondensator ES ist von einem Schalter S2 überbrückt, der den Kondensator ES kurzschließt und dabei entlädt, wenn das Rückhaltesystem RH nicht ordnungsgemäß in einem Fahrzeug eingebaut ist. Dieser Schalter S2 müßte sich also automatisch schließen, wenn das Rückhaltesystem RH zusammen mit der Ansteuerschaltung aus dem Fahrzeug ausgebaut wird. Damit wird verhindert, daß es bei noch geladenem Kondensator z. B. durch Störsignale oder ungewollte Kontakte zu einer Fehlauslösung des Rückhaltesystems RH kommt. Zu dem Schalter S2 ist ein Widerstand R in Reihe geschaltet, über den sich der Kondensator ES bei geschlossenem Schalter S2 entladen kann. Der Schalter S2 könnte auch durch die Steuerschaltung SS betätigt werden, sobald diese feststellt, daß über eine gewisse Zeit hinweg kein Ladestrom mehr vom Übertrager in den Kondensator ES fließt. Dieses Kriterium deutet nämlich darauf hin, daß das Rückhaltesystem mit der Ansteuerschaltung entweder fehlerhaft oder gar nicht im Fahrzeug installiert ist.

## Patentansprüche

1. Anordnung zum Ansteuern einer Auslösevorrichtung eines Rückhaltesystems für Fahrzeuginsassen, wobei ein Übertrager vorgesehen ist, an dessen Sekundärseite die Auslösevorrichtung angeschlossen ist, **dadurch gekennzeichnet, dass** der Auslösevorrichtung (RH) ein Kondensator als ein elektrischer Energiespeicher (ES) vorgeschaltet ist, der von einem über den Übertrager (ÜT) zugeführten Ladestrom gespeist wird, und dass sekundärseitig an den Übertrager (ÜT) eine Steuerschaltung (SS) angeschlossen ist, welche als Reaktion auf ein Triggersignal, das bei einer ein Auslösen des Rückhaltesystems (RH) erfordernden Situation über den Übertrager (ÜT) zugeführt wird, den elektrischen Energiespeicher (ES) an die Auslösevorrichtung durchschaltet, dass der Übertrager (ÜT) eine so geringe magnetische Kopplung aufweist, dass eine von ihm aufnehmbare elektromagnetische Energie nicht ausreicht, um damit das Rückhaltesystem (RH) auszulösen.

2. Anordnung nach Anspruch 1, **dadurch gekennzeichnet, dass** der Übertrager (ÜT) aus einer Primär- und einer Sekundärwicklung besteht, die gegeneinander verdrehbar oder verschiebbar gelagert sind.

3. Anordnung nach Anspruch 1, **dadurch gekennzeichnet, dass** die Steuerschaltung (SS) den Ladezustand des elektrischen Energiespeichers (ES) überwacht.

4. Anordnung nach Anspruch 1, **dadurch gekennzeichnet, dass** sich das Triggersignal vom Ladestrom dadurch unterscheidet, dass es eine von der Steuerschaltung (SS) erkennbare Frequenzlage oder Zeitdauer oder digitale Codierung aufweist.

5. Anordnung nach Anspruch 1, **dadurch gekennzeichnet, dass** Mittel (SW,C) vorgesehen sind, die den aus dem elektrischen Energiespeicher (ES) zur Auslösevorrichtung (RH) fließenden Entladestrom in einen Wechselstrom umformen.

6. Anordnung nach Anspruch 1, **dadurch gekennzeichnet, dass** die Steuerschaltung (SS) die Funktion der Auslösevorrichtung (RH) durch eine Widerstandsmessung überwacht und bei Abweichen des Widerstandes von einem vorgegebenen Wert ein Fehlersignal abgibt, das zu einem der an der Primärseite des Übertragers (ÜT) angeschlossenen Steuergeräte (SG) übertragen wird.

7. Anordnung nach Anspruch 1, **dadurch gekennzeichnet, dass** der elektrische Energiespeicher (ES) von einem Schalter (S2) überbrückt ist, der den Energiespeicher (ES) kurzschließt und dabei entlädt, wenn das Rückhaltesystem (RH) nicht in einem Fahrzeug eingebaut ist.

## Claims

1. Arrangement for driving a triggering device of a restraining system for vehicle occupants, a transformer being provided, the triggering device being connected to the secondary side of the said transformer, **characterized in that** a capacitor as an electrical energy store (ES) is connected upstream of the triggering device (RH) and is fed by a charging current supplied via the transformer (ÜT), and **in that** a control circuit (SS) is connected to the transformer (ÜT) on the secondary side, which control circuit connects the electrical energy store (ES) through to the triggering device as a reaction to a trigger signal which is supplied via the transformer (ÜT) in the event of a situation that requires triggering of the restraining system (RH),
**in that** the transformer (ÜT) has such a low magnetic coupling that an electromagnetic energy that can be taken up by it is not sufficient to trigger the restraining system (RH) therewith.

2. Arrangement according to Claim 1, **characterized in that** the transformer (ÜT) comprises a primary winding and a secondary winding, which are mounted such that they can be displaced or rotated relative to one another.

3. Arrangement according to Claim 1, **characterized in that** the control circuit (SS) monitors the charge state of the electrical energy store (ES).

4. Arrangement according to Claim 1, **characterized in that** the trigger signal differs from the charging current **in that** it has a frequency or time duration or digital coding which can be identified by the control circuit (SS).

5. Arrangement according to Claim 1, **characterized in that** means (SW, C) are provided which convert the discharge current flowing from the electrical energy store (ES) to the triggering device (RH) into an alternating current.

6. Arrangement according to Claim 1, **characterized in that** the control circuit (SS) monitors the function of the triggering device (RH) by a resistance measurement and, if the resistance deviates from a predetermined value, outputs an error signal which is transmitted to a control unit (SG) connected to the primary side of the transformer (ÜT).

7. Arrangement according to Claim 1, **characterized in that** the electrical energy store (ES) is bridged by a switch (S2), which short-circuits the energy store (ES) and discharges it in the process if the restraining system (RH) is not fitted in a vehicle.

## Revendications

1. Ensemble de commande d'un dispositif de déclenchement d'un système de retenue pour des passagers d'un véhicule, avec un transformateur dont le côté secondaire est raccordé au dispositif de déclenchement,
**caractérisé en ce qu'**
en amont du dispositif de déclenchement (RH) un condensateur servant d'accumulateur d'énergie électrique (ES) est alimenté en courant de charge amené par l'intermédiaire du transformateur (ÜT), et du côté secondaire un circuit de commande (SS) est raccordé au transformateur (ÜT) et en réaction à un signal de déclenchement transmis par le transformateur (ÜT) suite à une situation nécessitant un déclenchement du système de retenue (RH), met en communication l'accumulateur d'énergie électrique (ES) avec le dispositif de déclenchement, et le transformateur (ÜT) présente un couplage magnétique si faible qu'une énergie électromagnétique qu'il peut recevoir n'est pas suffisante pour déclencher le système de retenue (RH).

2. Ensemble selon la revendication 1,
**caractérisé en ce que**
le transformateur (ÜT) comprend un bobinage primaire et un bobinage secondaire, logés de manière rotative ou coulissante l'un par rapport à l'autre.

3. Ensemble selon la revendication 1,
**caractérisé en ce que**
le circuit de commande (SS) surveille l'état de charge de l'accumulateur d'énergie électrique (ES).

4. Ensemble selon la revendication 1,
**caractérisé en ce que**
le signal de déclenchement se distingue du courant de charge **en ce qu'**il présente une position de fréquence ou une durée ou un codage numérique identifiable par le circuit de commande (SS).

5. Ensemble selon la revendication 1,
**caractérisé en ce que**
des moyens (SW, C) sont prévus pour transformer le courant de décharge s'écoulant de l'accumulateur d'énergie électrique (ES) vers le dispositif de déclenchement (RH) en courant alternatif.

6. Ensemble selon la revendication 1,
**caractérisé en ce que**
le circuit de commande (SS) surveille le fonctionnement du dispositif de déclenchement (RH) à l'aide d'une mesure de résistance et, en cas d'écart de la résistance par rapport à une valeur prédéterminée, émet un signal de défaut, qui est transmis à l'un des appareils de commande (SG) raccordés au côté primaire du transformateur (ÜT).

7. Ensemble selon la revendication 1,
**caractérisé en ce que**
l'accumulateur d'énergie électrique (ES) est ponté par un interrupteur (S2), qui court-circuite l'accumulateur d'énergie (ES) et le décharge si le système de retenue (RH) n'est pas installé dans un véhicule.
